# EUROPÄISCHE PATENTSCHRIFT

(11) **EP 1 162 355 B1**
(45) Veröffentlichungstag und Bekanntmachung des Hinweises auf die Patenterteilung: **18.10.2006**
(21) Anmeldenummer: 01112642.2
(22) Anmeldetag: 25.05.2001
(51) Int. Cl.: F02C 7/18

(54) **Verfahren zum Kühlen einer Gasturbinenanlage und entsprechende Gasturbinenanlage**
Cooling method for a gas turbine and corresponding gas turbine
Méthode de refroidissement d'une turbine à gaz et turbine à gaz correspondante

(30) Priorität: 05.06.2000 DE 10027833
(43) Veröffentlichungstag der Anmeldung: 12.12.2001
(73) Patentinhaber: Alstom Technology Ltd, 5400 Baden (CH)
(72) Erfinder: Reiter, Wilhelm, 79790 Küssaberg (DE); Wettstein, Hans, Dr., 5442 Fislisbach (CH)

(56) Entgegenhaltungen:
- EP-A- 0 903 484
- US-A- 5 611 197
- US-A- 6 018 942
- PATENT ABSTRACTS OF JAPAN Bd. 1999, Nr. 12, 29. Oktober 1999 (1999-10-29) & JP 11 182263 A (HITACHI LTD), 6. Juli 1999 (1999-07-06)

## Beschreibung

### TECHNISCHES GEBIET

Die vorliegende Erfindung bezieht sich auf das Gebiet der Gasturbinen. Sie betrifft ein Verfahren zum Kühlen einer Gasturbine gemäss dem Oberbegriff des Anspruchs 1 sowie eine Gasturbinenanlage gemäss dem Oberbegriff des Anspruchs 13 zur Durchführung des Verfahrens.

Ein solches Verfahren und eine solche Gasturbinenanlage sind z. B. aus der Druckschrift US-A-5,611,197 bekannt.

### STAND DER TECHNIK

Bestehende Gasturbinen (Gasturbinenanlagen) verwenden zur Kühlung der heissen Teile, besonders der Brennkammer und der vom Heissgas durchströmten Turbine entweder Kühlfluide, die dem Verdichter (Kompressor) bei passendem Druck entnommen, manchmal auch noch nachgekühlt werden, und nach erfolgter Kühlung der heissen Teile der Turbinenströmung beigegeben werden, oder geschlossene Kühlkreisläufe, die von einer fremden Kühlfluidquelle, meistens mit Wasserdampf, versorgt werden. Bei letzteren - die häufig in Kombikraftwerken zu finden sind - kann die Kühlwärme im nachgeschalteten Prozess oft noch genutzt werden. Eine weitere Möglichkeit, die beispielsweise in der EP-A2-0 899 425 der Anmelderin beschrieben ist, kombiniert speziell bei der Schaufelkühlung ein geschlossenes Dampfkühlsystem im Hauptteil der Schaufel mit einem offenen Kühlsystem im Bereich der Schaufeleintrittskante.

Die erste Kategorie hat den Nachteil, dass das Kühlfluid, welches die Erwärmung in der Brennkammer inhärent umgeht, in der Kühlstrecke meistens einen höheren Druckabfall erleidet, als er für die Kühlaufgabe nötig ist. Zusätzlich werden Mischverluste beim Eintritt des Kühlfluids in die Hauptströmung erzeugt. Beides sind erhebliche Prozessverluste, die den Wirkungsgrad des Gesamtprozesses massgeblich beeinträchtigen.

Die zweite Kategorie der von aussen versorgten geschlossenen Kühlsysteme und insbesondere auch die dritte Kategorie der kombinierten Kühlsysteme hat zwar diese Nachteile nicht oder nur bedingt, der Betrieb wird dafür aber von einer äusseren Kühlmittelversorgung abhängig, was eine erhöhte Komplexität, sowie erhöhte Kosten und Sicherheitsrisiken mit sich bringt.

In der eingangs genannten US-A-5,611,197 ist nun eine Gasturbine mit einem geschlossenen Kühlsystem für die Leit- und Laufschaufeln sowie das Heissgasgehäuse der Turbine vorgeschlagen worden, bei welchem dem Verdichter auf einer mittleren Druckstufe oder am Ausgang Luft bei einem bestimmten Druck entnommen, als Kühlluft durch die zu kühlenden Bauteile geführt und anschliessend auf einer geeigneten niedrigeren Druckstufe wieder in den Verdichter eingespiesen wird. Die zurückgeführte Kühlluft kann dabei vor der Einspeisung in den Verdichter zusätzlich auch noch in einem Kühler abgekühlt werden.

Diese bekannte Art des geschlossenen Kühlkreislaufes hat hinsichtlich Einfachheit von Aufbau und Betrieb und Beeinflussung des Gesamtwirkungsgrades gegenüber den weiter oben beschriebenen Kühlungsarten erhebliche Vorteile. Nachteilig ist jedoch, dass im Falle der Rückkühlung der Kühlluft externe Kühlungsmittel (52 in der Figur der US-A-5,611,197) eingesetzt werden, um die zurückgeführte Kühlluft in einem Wärmetauscher (50) zu herunterzukühlen. Die der Kühlluft im Wärmetauscher entzogene Wärme wird so wirkungsgradmindernd dem Prozess der Gasturbinenanlage entzogen und kann allenfalls mit zusätzlichem Aufwand nutzbar gemacht werden.

### DARSTELLUNG DER ERFINDUNG

Es ist daher Aufgabe der Erfindung, ein Kühlverfahren für eine Gasturbinenanlage sowie eine Gasturbinenanlage zur Durchführung des Verfahrens anzugeben, welche die Nachteile bekannter Verfahren bzw. Gasturbinenanlagen vermeidet und sich insbesondere durch eine einfache und weitgehend wirkungsgradneutrale Rückkühlung auszeichnet.

Die Aufgabe wird durch die Gesamtheit der Merkmale der Ansprüche 1 und 15 gelöst. Der Kern der Erfindung besteht darin, zumindest einen wesentlichen Teil der Rückkühlung mittels mindestens eines Teiles der Verdichterendluft als Kühlmedium vorzunehmen. Die der Kühlluft entzogene Wärme gelangt so auf einfache Weise zurück in den Prozess der Gasturbinenanlage. Die Rückkühlung der Kühlluft mittels der Verdichterendluft wird dabei vorzugsweise in einem Wärmetauscher, insbesondere einem Gegenstrom-Wärmetauscher, durchgeführt.

Gemäss einer ersten bevorzugten Ausführungsform des erfindungsgemässen Verfahrens wird die Kühlluft in einem vollständig geschlossenen Kühlkreislauf durch die zu kühlenden Bauteile geführt. Hierdurch ist gewährleistet, dass keine verdichtete Luft wirkungsgradmindernd an der Brennkammer vorbei in die Hauptströmung gelangt.

Eine zweite bevorzugte Ausführungsform ist dadurch gekennzeichnet, dass ein Teil der Kühlluft zur Filmkühlung durch an den Bauteilen angeordnete Filmkühlbohrungen nach Art einer gezielten Leckage in die Turbinenströmung eingespiesen wird. Hierdurch ist es möglich, mit geringen Verlusten an verdichteter Luft eine sehr wirksame zusätzliche Filmkühlung der Aussenflächen der zu kühlenden Bauteile zu erreichen.

Die mittels der Kühlluft gekühlten, thermisch belasteten Bauteile umfassen vorzugsweise die Wände der Uebergangsbereiche Brennkammer-Gasturbine und/oder Gehäuseteile der Turbine und/oder Rotorteile der Turbine und/oder Schaufeln der Turbine. Werden die Schaufeln der Turbine mittels der Kühlluft gekühlt, ist es besonders wirkungsvoll, wenn Filmkühlbohrungen an den Schaufeleintrittskanten und/oder den Schaufelaustrittskanten angeordnet sind.

Tritt beim Kühlvorgang ein Druckverlust in der Kühlluft auf, muss die Kühlluft nach dem Kühlvorgang rekomprimiert werden. Zum Verdichten der Kühlluft nach dem Kühlvorgang wird dabei bevorzugt der Verdichter der Gasturbinenanlage selbst verwendet, oder es wird ein externer Verdichter eingesetzt.

Reicht die Rückkühlung im Wärmetauscher mittels der Verdichterendluft nicht aus, wird nach der Rückkühlung mittels der Verdichterendluft eine weitere Nachkühlung der Kühlluft vorgenommen, für die vorzugsweise ein von einem separaten Kühlmedium durchströmter Kühler verwendet wird. Es ist aber auch denkbar und sinnvoll, zur Nachkühlung der Kühlluft Wasser direkt in die Kühlluft einzuspritzen.

Eine bevorzugte Ausführungsform der erfindungsgemässen Gasturbinenanlage zeichnet sich dadurch aus, dass die zweiten Kühlleitungen in den Verdichter auf einer mittleren Druckstufe münden. Es ist aber auch denkbar, dass statt dessen in den zweiten Kühlleitungen ein externer Verdichter angeordnet ist, und dass die zweiten Kühlleitungen in den Ausgang des Verdichters der Gasturbinenanlage münden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein stark vereinfachtes Anlagenschema einer Gasturbinenanlage gemäss einem ersten Ausführungsbeispiel der Erfindung mit einem Kühlkreislauf für die Schaufeln der Turbine, der einen Wärmetauscher zur Rückkühlung durch die Verdichterendluft und einem zusätzlichen Kühler zur Nachkühlung umfasst;
- Fig. 2: den Querschnitt durch eine beispielhafte Schaufel mit Filmkühlung an der Schaufeleintrittskante und Schaufelaustrittskante, wie sie an einen Kühlkreislauf gemäss Fig. 1 angeschlossen sein kann;
- Fig. 3: eine zu Fig. 1 vergleichbare Darstellung eines zweiten Ausführungsbeispiels der Erfindung mit Rekompression der Kühlluft durch einen externen Verdichter;
- Fig. 4: eine zu Fig. 1 vergleichbare Darstellung eines dritten Ausführungsbeispiels der Erfindung mit sukzessiver Kühlung mehrerer Schaufelreihen in der Turbine;
- Fig. 5: eine zu Fig. 1 vergleichbare Darstellung eines vierten Ausführungsbeispiels der Erfindung, bei welchem die Nachkühlung der Kühlluft mittels Einspritzen von Wasser erfolgt; und
- Fig. 6: eine zu Fig. 1 vergleichbare Darstellung eines fünften Ausführungsbeispiels der Erfindung, bei dem die Wände der Brennkammer (Brennkammerliner) und/oder das Heissgasgehäuse der Turbine gekühlt werden.

### WEGE ZUR AUSFÜHRUNG DER ERFINDUNG

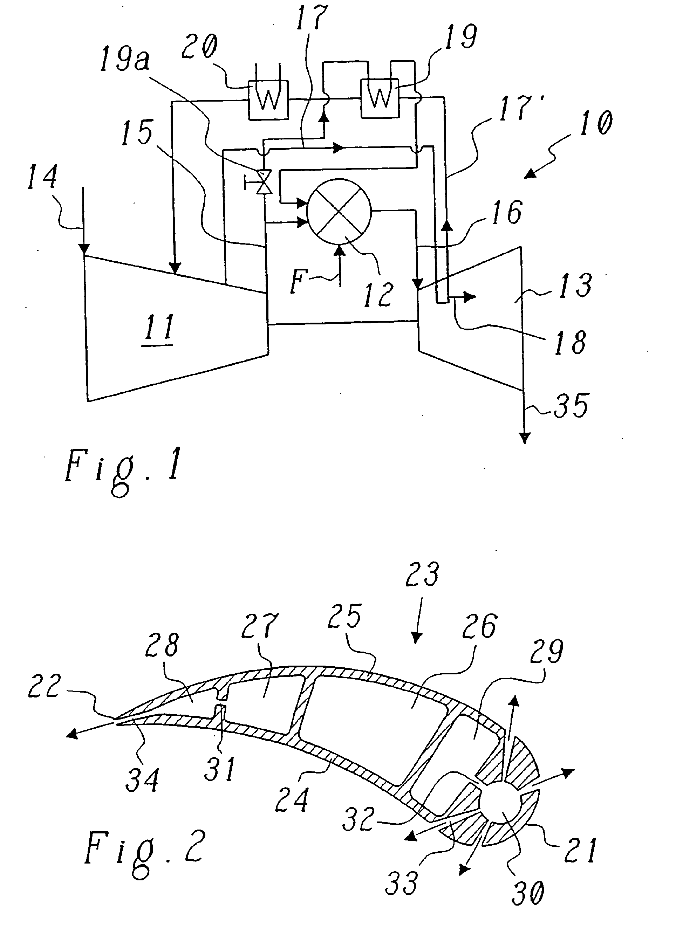

In Fig. 1 ist ein stark vereinfachtes Anlagenschema einer Gasturbinenanlage gemäss einem ersten Ausführungsbeispiel der Erfindung mit einem Kühlkreislauf wiedergegeben. Die Gasturbinenanlage 10 umfasst einen (üblicherweise mehrstufigen) Verdichter 11, eine Brennkammer 12 und eine (üblicherweise mehrstufige) Turbine 13. Verdichter 11 und Turbine 13 weisen entsprechende Schaufelreihen auf, die auf einem gemeinsamen Rotor angeordnet sind. Der Verdichter 11 saugt eingangsseitig Ansaugluft 14 an, verdichtet sie und gibt sie ausgangsseitig in Form von Verdichterendluft 15 an die Brennkammer 12 ab, wo sie als Verbrennungsluft zur Verbrennung eines (flüssigen oder gasförmigen) Brennstoffes F verwendet wird. Das bei der Verbrennung entstehende Heissgas 16 wird in der nachfolgenden Turbine 13 unter Arbeitsleistung entspannt und schliesslich als Abgas 35 an einen Kamin oder - in einem Kombikraftwerk - an einen nachgeschalteten Abhitzedampferzeuger weitergeleitet.

In der Turbine 13 befinden sich - umgeben von einem Heissgasgehäuse - verschiedene Reihen von Leit- und Laufschaufeln, die dem aus der Brennkammer 12 kommenden Heissgas 16 ausgesetzt sind, wobei die thermische Belastung der Schaufeln und Gehäuseteile um so grösser ist, je näher sie am Eingang der Turbine 13 plaziert sind. Diese thermisch stark belasteten Bauteile müssen gekühlt werden, um bei den für einen guten Wirkungsgrad erforderlichen hohen Heissgastemperaturen eine ausreichende Standzeit zu erreichen.

Erfindungsgemäss werden die thermisch belasteten Bauteile nun mit Kühlluft gekühlt, die aus dem Verdichter 11 bei einem vorgegebenen Druckniveau entnommen, über eine erste Kühlleitung 17 zum zu kühlenden Bauteil geführt, dort zur Kühlung eingesetzt und anschliessend zum überwiegenden Teil über eine zweite Kühlleitung 17' zum Verdichter 11 zurückgeführt und dort auf einem niedrigeren Druckniveau wieder eingespiesen wird. Durch diese Art der Wiedereinspeisung kann der Verdichter 11 den beim Kühlvorgang entstandenen Druckverlust ausgleichen. Die Kühlluft nimmt damit vollständig oder zumindest zu einem überwiegenden Teil als Verbrennungsluft am Verbrennungsprozess Teil und führt daher nur zu geringen Verlusten im Wirkungsgrad. Die Kühlung der thermisch belasteten Bauteile ist ausschliesslich oder überwiegend eine Innenkühlung, bei der die Kühlluft durch im Inneren der Bauteile vorgesehene Kühlkanäle strömt. Es ergibt sich so ein vollständig oder weitgehend geschlossener Kühlkreislauf.

Der Kühlkreislauf ist nicht vollständig geschlossen, wenn eine zusätzliche Aussenkühlung in Form einer Filmkühlung vorgesehen ist oder wenn beabsichtigte oder nicht beabsichtigte Leckagen auftreten. Am zu kühlenden Bauteil sind dazu beispielsweise Ausströmöffnungen (Filmkühlbohrungen) angeordnet, durch die ein Teil der zirkulierenden Kühlluft als Leckageluft 18 nach aussen strömt und auf der heissgasbelasteten Aussenfläche des Bauteils einen kühlenden Film bildet. Der Anteil an Leckageluft 18 ist dabei so gewählt, dass einerseits der Gesamtwirkungsgrad der Anlage nur geringfügig verringert wird, sich andererseits aber eine wirksame Filmkühlung einstellt. Die Leckageluft 18, die in die Turbinenströmung einfliesst und damit nicht mehr durch die Brennkammer 12 geführt werden kann, ist in Fig. 1 durch kleine, vom Kühlkreislauf abgehende Pfeile 18 symbolisiert.

Gemäss der Erfindung wird nun die beim Kühlvorgang von der Kühlluft aufgenommene Wärme vor Wiedereinspeisung in den Verdichter 11 dadurch aus der Kühlluft entfernt und in den Prozess zurückgeführt, dass zur Rückkühlung in der zweiten Kühlleitung 17' ein von mindestens einem Teil der Verdichterendluft 15 durchströmter Wärmetauscher 19, vorzugsweise ein Gegenstrom-Wärmetauscher, angeordnet wird. Der Anteil der Verdichterendluft 15, der im Wärmetauscher 19 Wärme aufnehmen soll, kann mittels eines Regelventils 19a eingestellt werden. Wird eine weitere Nachkühlung benötigt, ist dem Wärmetauscher 19 ein zusätzlicher Kühler 20 nachgeschaltet, der mit einem separaten Kühlmedium, z.B. Wasser oder Dampf, arbeitet.

Die Nachkühlung mittels des Kühlers 20 kann gleichzeitig dazu eingesetzt werden, die Temperatur der im Verdichter 11 verdichteten Luft nach Art eines Zwischenkühlers abzusenken. Wird die Kühlluft in dem Kühler 20 wesentlich stärker rückgekühlt, als es der Wärmeaufnahme beim Kühlvorgang entspricht, kann die Verdichterendtemperatur, d.h., die Temperatur der Verdichterendluft 15 abgesenkt werden, was eine Steigerung des Druckverhältnisses und damit eine Erhöhung des Wirkungsgrades ermöglicht.

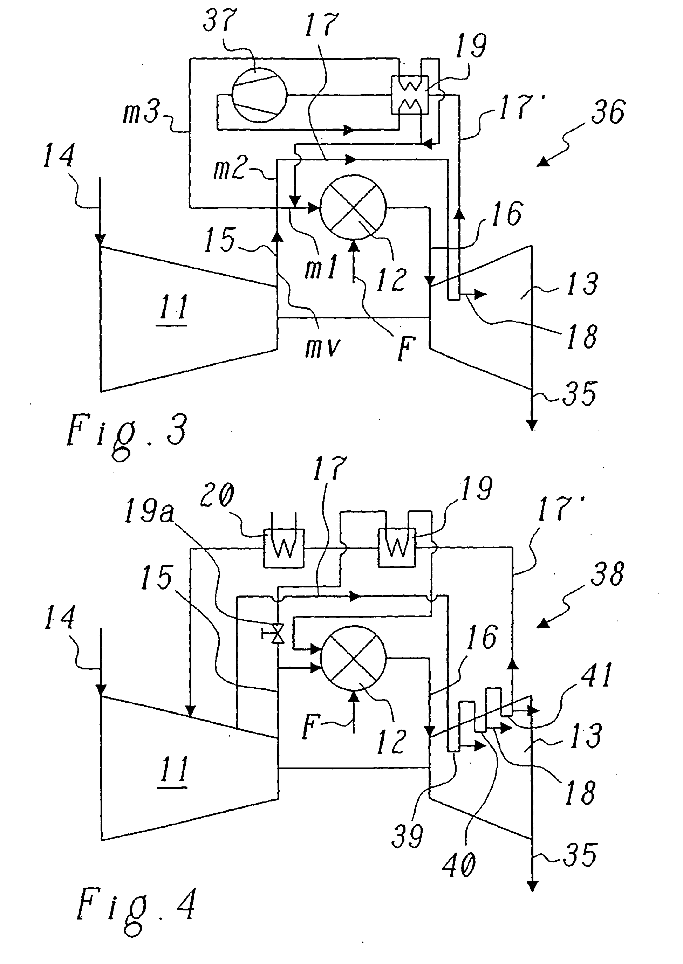

Handelt es sich bei dem zu kühlenden Bauteil um eine Schaufel bzw. eine Schaufelreihe der Turbine 13, wird - wenn der Kühlkreislauf nicht vollständig geschlossen ist - die Leckageluft 18 vorzugsweise dazu verwendet, die Schaufeleintrittskanten und/oder Schaufelaustrittskanten der Schaufel(n) durch Filmkühlung zu kühlen. Eine dazu geeignete beispielhafte Schaufel 23 ist im Querschnitt in Fig. 2 dargestellt. Die Schaufel 23 hat eine druckseitige Schaufelwand 24 und eine saugseitige Schaufelwand 25, die sich jeweils an der Schaufeleintrittskante 21 und an der Schaufelaustrittskante 22 vereinigen. Im Inneren der Schaufel 23 sind - durch Stützwände voneinander getrennt - verschiedene Kühlkanäle 26, .., 30 angeordnet, die in Achsenrichtung der Schaufel 23 (d.h. senkrecht zur Zeichenebene) verlaufen und von der Kühlluft in wechselnder Richtung durchströmt werden (siehe z.B. die EP-A2-0 899 425). Von den im Bereich der Kanten 21, 22 angeordneten Kühlkanälen 28 und 30 gehen Filmkühlbohrungen 33 bzw. 34 nach aussen, durch welche die Leckageluft 18 ausströmen und auf der Aussenseite einen Kühlfilm bilden kann (siehe z.B. auch die US-A-5,498,133). Die Kühlkanäle 28, 30 werden dabei aus den angrenzenden Kühlkanälen 27, 29 durch Verbindungskanäle 31, 32 mit Kühlluft versorgt.

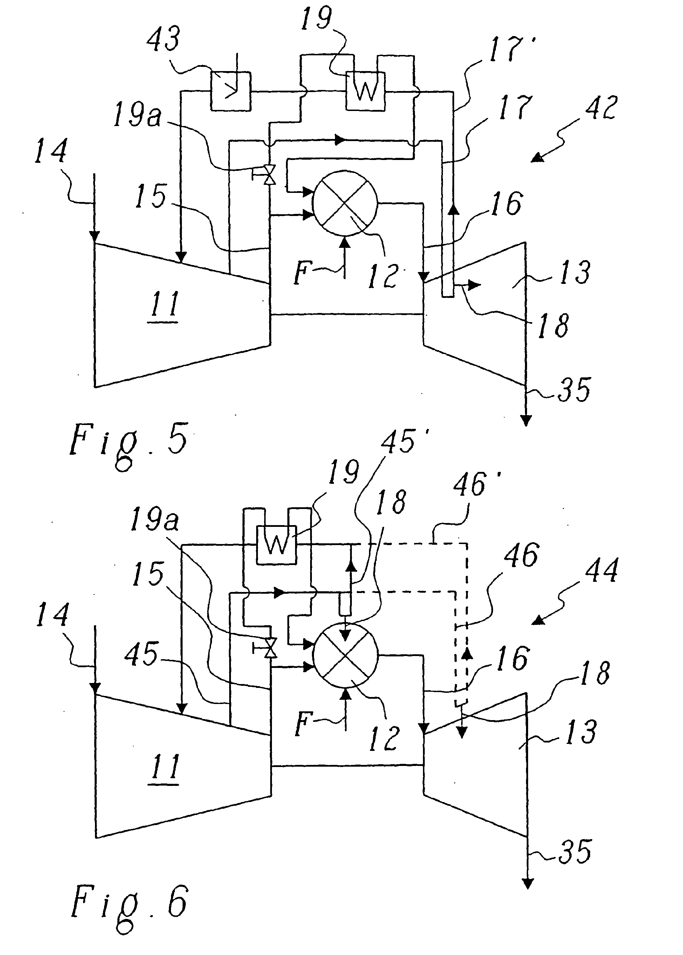

Ausgehend von dem in Fig. 1 dargestellten Grundschema der erfindungsgemässen Kühlung können im Rahmen der Erfindung verschiedene Varianten realisiert werden, die auf unterschiedliche Anwendungsfälle abgestimmt sind und ihre speziellen Vorteile aufweisen. Bei dem in Fig. 3 wiedergegebenen Ausführungsbeispiel einer Gasturbinenanlage 36 ist eine dieser Varianten verwirklicht. Bei dem hier gezeigten Kühlkreislauf, der durch die Kühlleitungen 17 und 17' gebildet wird, wird die Verdichterendluft 15 mit dem Verdichter-Endmassenstrom mv in drei Teilströme mit den Massenströmen m1, m2 und m3 aufgeteilt, wobei mv = m1 + m2 + m3 gilt und jeder der Teilmassenströme ≥ 0 ist. Der erste Teilmassenstrom m1 gelangt direkt in die Brennkammer 12. Der zweite Teilmassenstrom m2 strömt zur Kühlung der Turbine 13 durch die Kühlleitungen 17 und 17' und den Wärmetauscher 19 und wird anschliessend mittels eines externen Verdichters 37 rekomprimiert. Der Wärmetauscher 19 wird im Gegenstrom von dem dritten Teilmassenstrom m3 und dem rekomprimierten zweiten Teilmassenstrom m2 durchströmt, die hinter dem Wärmetauscher vereint und zusammen mit dem ersten Teilmassenstrom m1 der Brennkammer 12 zugeführt werden. Die notwendige Rekompression nach Durchlaufen des Wärmetauschers 19 wird daher nicht im Verdichter 11 der Gasturbinenanlage 35 vorgenommen, sondern im externen Verdichter 37. Auch hier kann für eine Nachkühlung ein zusätzlicher Kühler vorgesehen werden. Wenn bei dieser Anordnung die Kühlluft mittels des externen Verdichters 37 auf einen gegenüber dem Druck der Verdichterendluft 15 höheren Druck verdichtet wird, ist es möglich und vorteilhaft, die verdichtete Kühlluft für eine Showerheadkühlung in einer ersten Turbinenstufe der Turbine 13 zu verwenden. Es ist aber auch denkbar und sinnvoll, mit einem Teilmassenstrom wie m2 Teile der Brennkammer zu kühlen, wie dies für eine vergleichbare Lösung im Zusammenhang mit Fig. 6 weiter unten erläutert wird.

Ein anderes Ausführungsbeispiel der erfindungsgemässen Kühlung ist in Fig. 4 dargestellt. Der Kühlkreislauf der Gasturbinenanlage 38 mit den Kühlleitungen 17 und 17' wird bei diesem Beispiel nicht nur für eine einzelne Schaufelreihe der Turbine 13 verwendet, sondern für mehrere Schaufelreihen 39, 40 und 41, die von der Kühlluft sequentiell durchströmt werden. In jeder der Schaufelreihen 39, .., 41 kann zur Filmkühlung der Kanten wiederum Leckageluft 18 in die Hauptströmung der Turbine 13 ausströmen.

Eine andere Möglichkeit der Nachkühlung ist im Ausführungsbeispiel der Fig. 5 dargestellt. Bei der Gasturbinenanlage 42 dieser Figur ist in den Kühlkreislauf mit den Kühlleitungen 17, 17' hinter dem Wärmetauscher 19 zur Nachkühlung eine Einspritzvorrichtung 43 eingefügt, in welcher nach Art einer "Quenchkühlung" Wasser in die Kühlluft eingespritzt bzw. eingedüst wird. Die dadurch erreichbare Temperaturabsenkung der Kühlluft wird vorzugsweise so ausgelegt, dass nach der Vermischung der rückgekühlten Kühlluft mit der durch den Verdichter 11 strömenden Hauptluft die Temperatur des Mischgases verringert wird. Wie bereits oben erwähnt, besteht dadurch die Möglichkeit, den Wirkungsgrad der Anlage zu erhöhen.

Schliesslich ist es gemäss Fig. 6 möglich, im Rahmen der Erfindung bei einer Gasturbinenanlage 44 anstelle der oder zusätzlich zu den Schaufeln der Turbine 13 auch andere thermisch stark belastete Bauteile der Anlage mit Luft im geschlossenen Kreislauf zu kühlen. So ist in Fig. 6 der Kühlkreislauf mit den Kühlleitungen 45, 45' und dem Wärmetauscher 19 dafür ausgelegt, die Wände der Brennkammer 12 bzw. die Brennkammerliner durch innere Kühlluftzirkulation und ggf. externe Filmkühlung mit Leckageluft 18 zu kühlen. Ein anderer (gestrichelt eingezeichneter) Kühlkreislauf mit den Kühlleitungen 46, 46' sorgt für eine innere und ggf. äussere Kühlung des Heissgasgehäuses der Turbine 13, insbesondere im Eintrittsbereich der heissen Gase.

Insgesamt ergibt sich mit der Erfindung eine wirkungsvolle Kühlung der thermisch belasteten Bauteile einer Gasturbinenanlage, die einfach aufgebaut ist und betrieben werden kann, und nur sehr geringe Auswirkungen auf den Gesamtwirkungsgrad der Anlage hat.

### BEZUGSZEICHENLISTE

- 10: Gasturbinenanlage
- 11: Verdichter (Kompressor)
- 12: Brennkammer
- 13: Turbine
- 14: Ansaugluft
- 15: Verdichterendluft
- 16: Heissgas
- 17, 17': Kühlleitung
- 18: Leckageluft
- 19: Wärmetauscher
- 19a: Regelventil
- 20: Kühler
- 21: Schaufeleintrittskante
- 22: Schaufelaustrittskante
- 23: Schaufel
- 24: Schaufelwand (druckseitig)
- 25: Schaufelwand (saugseitig)
- 26, .., 30: Kühlkanal (Schaufel)
- 31, 32: Verbindungskanal (Schaufel)
- 33, 34: Filmkühlbohrung (Schaufel)
- 35: Abgas
- 36, 38, 42, 44: Gasturbinenanlage
- 37: Verdichter (extern)
- 39, 40, 41: Schaufelreihe
- 43: Einspritzvorrichtung
- 45, 45'; 46, 46': Kühlleitung
- F: Brennstoff

## Patentansprüche

1. Verfahren zum Kühlen einer Gasturbinenanlage (10, 36, 38, 42, 44), umfassend einen Verdichter (11), welcher eingangsseitig Ansaugluft (14) ansaugt und zu ausgangsseitig zur Verfügung stehender Verdichterendluft (15) verdichtet, eine Brennkammer (12), in welcher unter Verwendung der Verdichterendluft (15) ein Brennstoff (F) unter Bildung von Heissgas (16) verbrannt wird, sowie eine Turbine (13), in welcher das Heissgas (16) unter Arbeitsleistung entspannt wird, bei welchem Verfahren verdichtete Luft aus dem Verdichter (11) entnommen, als Kühlluft zur Kühlung in einem innenliegenden Kühlkanal (26, .., 30) durch thermisch belastete Bauteile (23; 39, .., 41) der Brennkammer (12) und/oder der Turbine (13) geleitet, anschliessend rückgekühlt, dann verdichtet und schliesslich der Verdichterendluft (15) zugefügt wird, **dadurch gekennzeichnet, dass** zur Rückkühlung der Kühlluft mindestens ein Teil der Verdichterendluft (15) verwendet wird.

2. Verfahren nach Anspruch 1, **dadurch gekennzeichnet, dass** die Rückkühlung der Kühlluft mittels der Verdichterendluft (15) in einem Wärmetauscher (19), insbesondere einem Gegenstrom-Wärmetauscher, durchgeführt wird.

3. Verfahren nach einem der Ansprüche 1 und 2, **dadurch gekennzeichnet, dass** die Kühlluft in einem vollständig geschlossenen Kühlkreislauf durch die zu kühlenden Bauteile (23, 39, .., 41) geführt wird.

4. Verfahren nach einem der Ansprüche 1 und 2, **dadurch gekennzeichnet, dass** ein Teil der Kühlluft zur Filmkühlung durch an den Bauteilen (23; 39, .., 41) angeordnete Filmkühlbohrungen (33, 34) nach Art einer gezielten Leckage in die Turbinenströmung eingespiesen wird.

5. Verfahren nach einem der Ansprüche 1 bis 4, **dadurch gekennzeichnet, dass** die mittels der Kühlluft gekühlten, thermisch belasteten Bauteile die Wände der Uebergangsbereiche von der Brennkammer (12) zur Turbine (13) und/oder Gehäuseteile der Turbine (13) und/oder Rotorteile der Turbine (13) und/oder Schaufeln (23) der Turbine (13) umfassen.

6. Verfahren nach Anspruch 5, **dadurch gekennzeichnet, dass** die Schaufeln (23) der Turbine mittels der Kühlluft gekühlt werden, und dass Filmkühlbohrungen (33, 34) an den Schaufeln (23), vorzugsweise an den Schaufeleintrittskanten (21) und/oder den Schaufelaustrittskanten (22), angeordnet sind.

7. Verfahren nach einem der Ansprüche 5 und 6, **dadurch gekennzeichnet, dass** die Turbine (13) eine Mehrzahl von Schaufelreihen (39, 40, 41) umfasst, und dass die Schaufelreihen (39, 40, 41) nacheinander von der Kühlluft durchströmt werden.

8. Verfahren nach einem der Ansprüche 1 bis 7, **dadurch gekennzeichnet, dass** zum Verdichten der Kühlluft nach dem Kühlvorgang der Verdichter (11) der Gasturbinenanlage (10, 36, 38, 42, 44) selbst verwendet wird.

9. Verfahren nach einem der Ansprüche 1 bis 7, **dadurch gekennzeichnet, dass** zum Verdichten der Kühlluft nach dem Kühlvorgang ein externer Verdichter (37) verwendet wird.

10. Verfahren nach Anspruch 9, **dadurch gekennzeichnet, dass** die Kühlluft mittels des externen Verdichters (37) auf einen gegenüber dem Druck der Verdichterendluft (15) höheren Druck verdichtet wird, und dass die verdichtete Kühlluft für eine Showerheadkühlung in einer ersten Turbinenstufe der Turbine (13) verwendet wird.

11. Verfahren nach einem der Ansprüche 1 bis 10, **dadurch gekennzeichnet, dass** nach der Rückkühlung mittels der Verdichterendluft (15) eine weitere Nachkühlung der Kühlluft vorgenommen wird.

12. Verfahren nach Anspruch 11, **dadurch gekennzeichnet, dass** zur Nachkühlung ein von einem separaten Kühlmedium, vorzugsweise von einem Kombiprozess nutzbarer Dampf, durchströmter Kühler (20) verwendet wird.

13. Verfahren nach Anspruch 11, **dadurch gekennzeichnet, dass** zur Nachkühlung der Kühlluft Wasser direkt in die Kühlluft eingespritzt wird.

14. Verfahren nach Anspruch 1, **dadurch gekennzeichnet, dass** der Massenstrom (mv) der Verdichterendluft (15) in mehrere Teilmassenströme (m1, m2, m3) aufgeteilt wird, dass ein Teilmassenstrom (m1) direkt in die Brennkammer (12) geleitet wird, dass ein anderer Teilmassenstrom (m2) als Kühlluft verwendet wird, und dass ein weiterer Teilmassenstrom (m3) zur Rückkühlung der Kühlluft verwendet wird.

15. Gasturbinenanlage (10, 36, 42, 44) zur Durchführung des Verfahrens nach einem der Ansprüche 1 bis 13, umfassend einen Verdichter (11), welcher eingangsseitig Ansaugluft (14) ansaugt und zu ausgangsseitig zur Verfügung stehender Verdichterendluft (15) verdichtet, eine Brennkammer (12), in welcher unter Verwendung der Verdichterendluft (15) ein Brennstoff (F) unter Bildung von Heissgas (16) verbrannt wird, sowie eine Turbine (13), in welcher das Heissgas (16) unter Arbeitsleistung entspannt wird, wobei zur Kühlung von thermisch belasteten Bauteilen (23; 39, .., 41) der Brennkammer (12) und/oder der Turbine (13) erste Kühlleitungen für Kühlluft (17, 45, 46) von dem Verdichter (11) und/oder dem Ausgang des Verdichters (11) zu den Bauteilen (23; 39, .., 41) und zweite Kühlleitungen (17', 45', 46') von den Bauteilen (23; 39, .., 41) zum Verdichter (11) und/oder dem Ausgang des Verdichters (11) zurück vorgesehen sind, **dadurch gekennzeichnet, dass** in die zweiten Kühlleitungen (17', 45', 46') zur Rückkühlung der Kühlluft ein von mindestens einem Teil der Verdichterendluft (15) durchströmter Wärmetauscher (19) eingefügt ist.

16. Gasturbinenanlage nach Anspruch 15, **dadurch gekennzeichnet, dass** die zweiten Kühlleitungen (17', 45', 46') in den Verdichter (11) auf einer mittleren Druckstufe münden.

17. Gasturbinenanlage nach Anspruch 15, **dadurch gekennzeichnet, dass** in den zweiten Kühlleitungen (17', 45', 46') ein externer Verdichter (37) angeordnet ist, und dass die zweiten Kühlleitungen (17', 45', 46') in den Ausgang des Verdichters (11) der Gasturbinenanlage (36) münden.

18. Gasturbinenanlage nach einem der Ansprüche 15 bis 17, **dadurch gekennzeichnet, dass** in den zweiten Kühlleitungen (17', 45', 46') hinter dem Wärmetauscher (19) ein mit einem separaten Kühlmedium betriebener Kühler (20) angeordnet ist.

19. Gasturbinenanlage nach einem der Ansprüche 15 bis 17, **dadurch gekennzeichnet, dass** in den zweiten Kühlleitungen (17', 45', 46') hinter dem Wärmetauscher (19) eine Einspritzvorrichtung (47) zum Einspritzen von Wasser in die Kühlluft angeordnet ist.

20. Gasturbinenanlage nach einem der Ansprüche 15 bis 19, **dadurch gekennzeichnet, dass** die zu kühlenden Bauteile (23; 39, .., 41) Filmkühlbohrungen (33, 34) und/oder Dichtspalte aufweisen, welche mit den ersten und zweiten Kühlleitungen (17, 45, 46 bzw. 17', 45', 46') in Verbindung stehen.

21. Gasturbinenanlage nach Anspruch 20, **dadurch gekennzeichnet, dass** die gekühlten Bauteile Schaufeln (23) der Turbine (13) umfassen, dass Filmkühlbohrungen (33, 34) vorgesehen sind, und dass die Filmkühlbohrungen (33, 34) an den Schaufeleintrittskanten (21) und/oder den Schaufelaustrittskanten (22) angeordnet sind.

## Claims

1. Method for cooling a gas turbine plant (10, 36, 38, 42, 44) comprising a compressor (11), which sucks in intake air (14) on the inlet side and compresses it into compressor discharge air (15) available on the outlet side, a combustion chamber (12), in which, using the compressor discharge air (15), a fuel (F) is burnt so as to form hot gas (16), and a turbine (13), in which the hot gas (16) is expanded, so as to perform work, in which method compressed air is extracted from the compressor (11), is conducted as cooling air for cooling in an internal cooling duct (26, ..., 30) through thermally loaded components (23; 39, ..., 41) of the combustion chamber (12) and/or of the turbine (13), is subsequently recooled, then compressed and is finally added to the compressor discharge air (15), **characterized in that** at least a part of the compressor discharge air (15) is used for recooling the cooling air.

2. Method according to Claim 1, **characterized in that** the recooling of the cooling air by means of the compressor output air (15) is carried out in a heat exchanger (19), in particular a countercurrent heat exchanger.

3. Method according to one of Claims 1 and 2, **characterized in that** the cooling air is routed in a completely closed cooling circuit through the components (23, 39, ..., 41) to be cooled.

4. Method according to one of Claims 1 and 2, **characterized in that** a part of the cooling air is fed, for film cooling, into the turbine flow through film-cooling bores (33, 34) arranged on the components (23; 39, ..., 41), in the manner of a controlled leakage.

5. Method according to Claims 1 to 4, **characterized in that** the thermally loaded components cooled by means of the cooling air comprise the walls of the transition regions from the combustion chamber (12) to the turbine (13) and/or casing parts of the turbine (13) and/or rotor parts of the turbine (13) and/or blades (23) of the turbine (13).

6. Method according to Claim 5, **characterized in that** the blades (23) of the turbine are cooled by means of the cooling air, and **in that** the film-cooling bores (33, 34) are arranged at the blades (23), preferably at the blade entry edges (21) and/or the blade exit edges (22).

7. Method according to one of Claims 5 and 6, **characterized in that** the turbine (13) comprises a plurality of blade rows (39, 40, 41), and **in that** the cooling air flows through the blade rows (39, 40, 41) in succession.

8. Method according to one of Claims 1 to 7, **characterized in that** the compressor (11) of the gas turbine plant (10, 36, 38, 42, 44) itself is used for compressing the cooling air after the cooling operation.

9. Method according to one of Claims 1 to 7, **characterized in that** an external compressor (37) is used for compressing the cooling air after the cooling operation.

10. Method according to Claim 9, **characterized in that** the cooling air is compressed by means of the external compressor (37) to higher pressure with respect to the pressure of the compressor output air (15), and **in that** the compressed cooling air is used for shower-head cooling in a first turbine stage of the turbine (13).

11. Method according to one of Claims 1 to 10, **characterized in that**, after recooling by means of the compressor output air (15), a further aftercooling of the cooling air is carried out.

12. Method according to Claim 11, **characterized in that**, for aftercooling, a cooler (20) through which a separate cooling medium, preferably steam utilizable in a combined-cycle process, is used.

13. Method according to Claim 11, **characterized in that** water is injected directly into the cooling air for aftercooling the latter.

14. Method according to Claim 1, **characterized in that** the mass flow (mv) of the compressor output air (15) is divided into a plurality of part mass flows (m1, m2, m3), **in that** one part mass flow (m1) is conducted directly into the combustion chamber (12), **in that** another part mass flow (m2) is used as cooling air, and **in that** a further part mass flow (m3) is used for recooling the cooling air.

15. Gas turbine plant (10, 36, 42, 44) for carrying out the method according to one of Claims 1 to 13, comprising a compressor (11), which sucks in intake air (14) on the inlet side and compresses it into compressor discharge air (15) available on the outlet side, a combustion chamber (12), in which, using the compressor discharge air (15), a fuel (F) is burnt so as to form hot gas (16), and a turbine (13), in which the hot gas (16) is expanded so as to perform work, there being provided for the cooling of thermally loaded components (23; 39, ..., 41) of the combustion chamber (12) and/or of the turbine (13) first cooling lines for cooling air (17, 45, 46) from the compressor (11) and/or the outlet of the compressor (11) to the components (23; 39, ..., 41) and second cooling lines (17', 45', 46) from the components (23; 39, ..., 41) back to the compressor (11) and/or the outlet of the compressor (11), **characterized in that** a heat exchanger (19), through which at least a part of the compressor discharge air (15), is inserted in the second cooling lines (17', 45', 46') for recooling the cooling air.

16. Gas turbine plant according to Claim 15, **characterized in that** the second cooling lines (17', 45', 46') issue into the compressor (11) at a medium pressure stage.

17. Gas turbine plant according to Claim 15, **characterized in that** an external compressor (37) is arranged in the second cooling lines (17', 45', 46'), and **in that** the second cooling lines (17', 45', 46') issue into the outlet of the compressor (11) of the gas turbine plant (36).

18. Gas turbine plant according to one of Claims 15 to 17, **characterized in that** a cooler (20) operated with a separate cooling medium is arranged in the second cooling lines (17', 45', 46') behind the heat exchanger (19).

19. Gas turbine plant according to one of Claims 15 to 17, **characterized in that** an injection device (47) for the injection of water into the cooling air is arranged in the second cooling lines (17', 45', 46') behind the heat exchanger (19).

20. Gas turbine plant according to one of Claims 15 to 19, **characterized in that** the components (23; 39, ..., 41) to be cooled have film-cooling bores (33, 34) and/or sealing gaps which are connected to the first and the second cooling lines (17, 45, 46 and 17', 45' 46').

21. Gas turbine plant according to Claim 20, **characterized in that** the cooled components comprise blades (23) of the turbine (13), **in that** film-cooling bores (33, 34) are provided, and **in that** the film-cooling bores (33, 34) are arranged at the blade entry edges (21) and/or the blade exit edges (22).

## Revendications

1. Procédé de refroidissement d'une installation de turbine à gaz (10, 36, 38, 42, 44), comprenant un compresseur (11) qui aspire du côté de l'entrée de l'air d'admission (14) et qui comprime de l'air de sortie du compresseur (15) disponible du côté de la sortie, une chambre de combustion (12), dans laquelle un combustible (F) est brûlé en utilisant l'air de sortie du compresseur (15) pour former du gaz chaud (16), ainsi qu'une turbine (13), dans laquelle le gaz chaud (16) est détendu en fournissant du travail, dans lequel procédé l'air comprimé est prélevé du compresseur (11), est guidé sous forme d'air de refroidissement en vue du refroidissement dans un canal de refroidissement interne (26, ..., 30) à travers des composants (23 ; 39, ..., 41) de la chambre de combustion (12) et/ou de la turbine (13) soumis à une contrainte thermique, puis est post-refroidi, puis comprimé, et finalement acheminé à l'air de sortie du compresseur (15), **caractérisé en ce que** pour le post-refroidissement de l'air de refroidissement, on utilise au moins une partie de l'air de sortie du compresseur (15).

2. Procédé selon la revendication 1, **caractérisé en ce que** le post-refroidissement de l'air de refroidissement s'effectue au moyen de l'air de sortie du compresseur (15) dans un échangeur de chaleur (19), notamment un échangeur de chaleur à contre-courant.

3. Procédé selon l'une quelconque des revendications 1 et 2, **caractérisé en ce que** l'air de refroidissement est guidé dans un circuit de refroidissement complètement fermé à travers les composants à refroidir (23, 39, ..., 41).

4. Procédé selon l'une quelconque des revendications 1 et 2, **caractérisé en ce qu'**une partie de l'air de refroidissement est injecté dans l'écoulement de la turbine en vue de produire un refroidissement par film à travers des alésages de refroidissement par film (33, 34) disposés sur les composants (23 ; 39, ..., 41) à la manière d'une fuite contrôlée.

5. Procédé selon l'une quelconque des revendications 1 à 4, **caractérisé en ce que** les composants refroidis avec l'air de refroidissement, soumis à une contrainte thermique, incluent les parois des zones de transfert de la chambre de combustion (12) à la turbine (13) et/ou les parties du boîtier de la turbine (13) et/ou les parties du rotor de la turbine (13) et/ou les aubes (23) de la turbine (13).

6. Procédé selon la revendication 5, **caractérisé en ce que** les aubes (23) de la turbine sont refroidies au moyen de l'air de refroidissement, et **en ce que** les alésages de refroidissement par film (33, 34) sont disposés sur les aubes (23), de préférence sur les arêtes d'entrée des aubes (21) et/ou sur les arêtes de sortie des aubes (22).

7. Procédé selon l'une quelconque des revendications 5 et 6, **caractérisé en ce que** la turbine (13) comprend une pluralité de rangées d'aubes (39, 40, 41), et **en ce que** les rangées d'aubes (39, 40, 41) sont parcourues successivement par l'air de refroidissement.

8. Procédé selon l'une quelconque des revendications 1 à 7, **caractérisé en ce que** pour la compression de l'air de refroidissement après l'opération de refroidissement, on utilise le compresseur (11) de l'installation de turbine à gaz (10, 36, 38, 42, 44) elle-même.

9. Procédé selon l'une quelconque des revendications 1 à 7, **caractérisé en ce que** pour la compression de l'air de refroidissement après l'opération de refroidissement, on utilise un compresseur extérieur (37).

10. Procédé selon la revendication 9, **caractérisé en ce que** l'air de refroidissement est comprimé au moyen du compresseur extérieur (37) à une pression supérieure à la pression de l'air de sortie du compresseur (15), et **en ce que** l'air de refroidissement comprimé est utilisé pour un refroidissement de type "showerhead" dans un premier étage de turbine de la turbine (13).

11. Procédé selon l'une quelconque des revendications 1 à 10, **caractérisé en ce qu'**après le post-refroidissement au moyen de l'air de sortie du compresseur (15), on effectue un post-refroidissement supplémentaire de l'air de refroidissement.

12. Procédé selon la revendication 11, **caractérisé en ce que** pour le post-refroidissement on utilise un refroidisseur (20) parcouru par un réfrigérant séparé, de préférence de la vapeur pouvant être utilisée par un processus combiné.

13. Procédé selon la revendication 11, **caractérisé en ce que** pour le post-refroidissement de l'air de refroidissement, de l'eau est injectée directement dans l'air de refroidissement.

14. Procédé selon la revendication 1, **caractérisé en ce que** le courant volumique (mv) de l'air de sortie du compresseur (15) est divisé en plusieurs courants volumiques partiels (m1, m2, m3), **en ce qu'**un courant volumique partiel (m1) est directement introduit dans la chambre de combustion (12), **en ce qu'**un autre courant volumique partiel (m2) est utilisé comme air de refroidissement et **en ce qu'**un courant volumique partiel supplémentaire (m3) est utilisé pour le post-refroidissement de l'air de refroidissement.

15. Installation de turbine à gaz (10, 36, 42, 44) pour mettre en oeuvre le procédé selon l'une quelconque des revendications 1 à 13, comprenant un compresseur (11) qui aspire du côté de l'entrée de l'air d'admission (14) et qui comprime de l'air de sortie du compresseur (15) disponible du côté de la sortie, une chambre de combustion (12), dans laquelle un combustible (F) est brûlé en utilisant l'air de sortie du compresseur (15) pour former du gaz chaud (16), ainsi qu'une turbine (13), dans laquelle le gaz chaud (16) est détendu en fournissant du travail, des premières conduites de refroidissement pour l'air de refroidissement (17, 45, 46) étant prévues du compresseur (11) et/ou de la sortie du compresseur (11) vers les composants (23, 39, ..., 41) et des deuxièmes conduites de refroidissement (17', 45', 46') étant prévues pour revenir des composants (23 ; 39, ... 41) au compresseur (11) et/ou à la sortie du compresseur (11), en vue du refroidissement de composants (23 ; 39, ... 41) de la chambre de combustion (12) et/ou de la turbine (13) soumis à une contrainte thermique, **caractérisée en ce que** dans les deuxièmes conduites de refroidissement (17', 45', 46') pour le post-refroidissement de l'air de refroidissement, on introduit un échangeur de chaleur (19) parcouru par au moins une partie de l'air de sortie du compresseur (15).

16. Installation de turbine à gaz selon la revendication 15, **caractérisée en ce que** les deuxièmes conduites de refroidissement (17', 45', 46') débouchent dans le compresseur (11) au niveau d'un étage de compression intermédiaire.

17. Installation de turbine à gaz selon la revendication 15, **caractérisée en ce que** dans les deuxièmes conduites de refroidissement (17', 45', 46') est disposé un compresseur extérieur (37) et **en ce que** les deuxièmes conduites de refroidissement (17', 45', 46') débouchent dans la sortie du compresseur (11) de l'installation de turbine à gaz (36).

18. Installation de turbine à gaz selon l'une quelconque des revendications 15 à 17, **caractérisée en ce que** l'on dispose dans les deuxièmes conduites de refroidissement (17', 45', 46') derrière l'échangeur de chaleur (19) un refroidisseur (20) fonctionnant avec un réfrigérant séparé.

19. Installation de turbine à gaz selon l'une quelconque des revendications 15 à 17, **caractérisée en ce que** l'on dispose dans les deuxièmes conduites de refroidissement (17', 45', 46') derrière l'échangeur de chaleur (19) un dispositif d'injection (47) pour injecter de l'eau dans l'air de refroidissement.

20. Installation de turbine à gaz selon l'une quelconque des revendications 15 à 19, **caractérisée en ce que** les composants à refroidir (23 ; 39, ..., 41) présentent des alésages de refroidissement par film (33, 34) et/ou des fentes d'étanchéité qui sont en liaison avec les premières et deuxièmes conduites de refroidissement (17, 45, 46, respectivement 17', 45', 46').

21. Installation de turbine à gaz selon la revendication 20, **caractérisée en ce que** les composants refroidis comprennent des aubes (23) de la turbine (13), **en ce que** des alésages de refroidissement par film (33, 34) sont prévus, et **en ce que** les alésages de refroidissement par film (33, 34) sont disposés sur les arêtes d'entrée des aubes (21) et/ou sur les arêtes de sortie des aubes (22).
